# DEMANDE DE BREVET EUROPEEN

(11) **EP 0 811 655 A2**
(43) Date de publication de la demande: **10.12.1997**
(21) Numéro de dépôt: 97201597.8
(22) Date de dépôt: 24.05.1997
(51) Int. Cl.: C08L 3/00, C08J 7/00

(54) **Procédé de traitement d'un produit plat comprenant une phase amylacée**

(30) Priorité: 06.06.1996 BE 9600510
(71) Demandeur: SOLVAY (Société Anonyme), B-1050 Bruxelles (BE)
(72) Inventeur: Claeys, Ivan, 1981 Zemst (Hofstade) (BE); Dehennau, Claude, 1410 Waterloo (BE)
(74) Mandataire: Dufrasne, Eugène

(57) **Abrégé**

L'invention concerne un procédé de traitement d'un produit plat comprenant une phase amylacée, ledit procédé comprenant une étape spécifique d'humidification du produit plat après sa fabrication. L'invention concerne également un procédé de production d'un article comprenant au moins un tel produit plat, ledit procédé de production comprenant un traitement selon l'invention et une étape de soudage par courant haute fréquence.

## Description

L'invention concerne un procédé de traitement d'un produit plat comprenant une phase amylacée.

L'intérêt porté par les producteurs de matières plastiques et les transformateurs aux produits biodégradables ou biofragilisables va croissant. Parmi ces produits, les compositions à base d'amidon ou de dérivé d'amidon ont des avantages économiques certains.

Un avantage supplémentaire résultant de l'utilisation d'amidon ou de dérivé d'amidon réside dans le fait qu'elle procure aux produits ainsi réalisés un certain niveau de soudabilité par courant haute fréquence. Cette propriété se révèle particulièrement intéressante dans le domaine des produits plats où il est souvent nécessaire d'obtenir des temps de soudage courts et des résistances de soudure élevées.

Plusieurs formulations à base d'une phase amylacée ont donc été proposées. Citons notamment la demande de brevet EP 0 587 216 A1 déposée au nom de SOLVAY (Société Anonyme) et décrivant des mélanges de polyoléfines avec un amidon thermoplastique (plastifié) et un composé ionique. Ces mélanges peuvent atteindre un niveau élevé de soudabilité par courant haute fréquence.

Malheureusement, on a constaté que cette soudabilité n'était pas parfaitement reproductible, mais dépendait des conditions de fabrication. Dans certains cas, elle ne se développait réellement qu'après une longue période de stockage du produit plat avant utilisation, augmentant ainsi le prix de revient de l'article réalisé.

De plus, les produits plats fabriqués sont généralement enroulés en bobines de plusieurs dizaines de centimètres d'épaisseur avant l'étape de soudage et la production de l'article fini. Dans ce cas, il apparaissait souvent une différence de soudabilité par courant haute fréquence entre le coeur de la bobine et les spires extérieures. Ceci impliquait que la qualité des soudures réalisées évoluait à mesure du déroulement de la bobine, justifiant donc une adaptation quasi continue des paramètres du soudage, avec pour corollaire un désavantage économique.

La demanderesse a constaté que ce comportement était lié à la teneur en eau du produit plat. En effet, à la mise en oeuvre, la formulation perd en grande partie l'eau qu'elle contenait, soit par une dévolatilisation intentionnelle, soit naturellement à cause des températures de transformation élevées nécessitées par les matières plastiques utilisées. La reprise d'eau progresse ensuite lentement, par diffusion, avec une durée proportionnelle au carré de l'épaisseur du produit plat.

Dès lors, la présente invention a pour objet un procédé de traitement d'un produit plat qui assure à celui-ci une boue reproductibilité dans ses propriétés de soudabilité par courant haute fréquence et diminue, voire annule, les différences de propriétés entre le coeur d'une bobine et sa périphérie.

L'invention concerne, dès lors, un procédé de traitement d'un produit plat comprenant une phase amylacée, caractérisé en ce que le produit plat est soumis, après sa fabrication, à au moins une étape spécifique d'humidification.

Le produit plat visé dans le cadre de l'invention peut être de tout type, notamment un film, une feuille, une membrane ou un ruban. De préférence, il s'agit d'un film ou d'une feuille.

D'autre part, le produit plat peut aussi bien être multicouche que monocouche, orienté ou non. Par exemple, il peut s'agir d'une structure composite multicouche possédant au moins une couche comprenant une phase amylacée. Dans ce cas, une ou plusieurs autres couches peuvent être essentiellement constituées d'un ou de plusieurs autres matériaux.

La fabrication dudit produit plat peut être réalisée par toute méthode, particulièrement par calandrage, par extrusion, par coextrusion, par exemple par extrusion-soufflage, extrusion-couchage, extrusion en filière plate et les techniques de coextrusion apparentées. La fabrication du produit plat peut éventuellement comprendre une étape d'étirage selon une ou plusieurs directions.

L'étape spécifique d'humidification du produit plat peut être réalisée selon toute méthode connue. De manière pratique, elle est réalisée par mise en contact avec de l'eau. Il peut s'agir par exemple de faire passer ledit produit plat dans une chambre dont l'atmosphère est enrichie, de préférence saturée, en vapeur d'eau. Alternativement, on peut immerger le produit plat dans un bain d'eau. Selon une autre variante, on peut soumettre le produit plat à une ou plusieurs pulvérisations d'eau liquide ou à un ou plusieurs jets de vapeur d'eau.

Afin de minimiser la durée de l'étape spécifique d'humidification, il est préférable que cette humidification soit effectuée à une température supérieure ou égale à 25 °C. De façon particulièrement préférée, cette température est supérieure ou égale à 50°C.

La durée de l'étape spécifique d'humidification est adaptée aux conditions du traitement et aux caractéristiques du produit plat. Avantageusement, cette durée ne dépasse pas 1 heure. De bons résultats ont été obtenus pour une durée ne dépassant pas 15 minutes. En particulier, des résultats très positifs ont été obtenus pour une durée ne dépassant pas 5 minutes.

Par phase amylacée, on entend tout type de composition essentiellement constituée d'un ou plusieurs amidons ou amidons modifiés. Ces amidons peuvent être déstructurés, prégélifiés, partiellement dépolymérisés, provenir de différentes origines végétales ou présenter un rapport pondéral quelconque entre l'amylose et l'amylopectine. Les amidons de blé natifs ont donné de très bons résultats.

La phase amylacée peut contenir en outre différents additifs propres à l'amidon ou ses dérivés, comme de l'eau et/ou des plastifiants. A titre de plastifiants, on peut citer, à titre non limitatif, la glycérine, le sorbitol, la diglycérine, les polyglycérines ou des mélanges de ceux-ci. D'autres additifs facilitant la mise en oeuvre de l'amidon aux hautes températures peuvent aussi être employés, comme l'urée et les sels d'acides hydroxycarboxyliques notamment. L'adjonction de sels ioniques, organiques ou inorganiques, et/ou de dérivés ioniques de l'amidon peut aussi être envisagée.

En général, la teneur en phase amylacée du produit plat ou, dans le cas d'une structure multicouche, de sa ou ses couches comprenant une phase amylacée, ne dépasse pas 60 % et de préférence pas 50 % en poids.

Cette même teneur n'est en général pas inférieure à 5 % et de préférence pas inférieure à 10 % en poids.

De préférence, le produit plat utilisé dans l'invention comprend en outre une matière thermoplastique. Par matière thermoplastique, on désigne tout polymère thermoplastique, y compris les élastomères thermoplastiques, ainsi que leurs mélanges. On désigne par le terme "polymère" aussi bien les homopolymères que les copolymères (binaires ou ternaires notamment), par exemple les copolymères à distribution aléatoire, les copolymères séquencés, les copolymères à bloc, les copolymères greffés, etc.

En général, la teneur en matière thermoplastique du produit plat ou, dans le cas d'une structure multicouche, de sa ou ses couches comprenant une phase amylacée, ne dépasse pas 95 % et de préférence pas 90 % en poids.

Cette même teneur n'est en général pas inférieure à 10 % et de préférence pas inférieure à 20 % en poids.

De manière avantageuse, la matière thermoplastique comprend une polyoléfine ou un mélange de polyoléfines. Par polyoléfine, on entend désigner tout homopolymère d'oléfine, tout copolymère contenant au moins deux oléfines différentes et tout copolymère comprenant au moins 70 % en poids d'unités dérivées d'oléfines.

De manière particulièrement avantageuse, au moins une polyoléfine est un polyéthylène. Par polyéthylène, on entend désigner tout homopolymère d'éthylène et tout copolymère comprenant au moins 70 % en poids d'éthylène. En particulier, les polyéthylènes linéaires de faible densité (LLDPE), les polyéthylènes de très faible densité (VLDPE), les polyéthylènes de faible densité (LDPE) et leurs mélanges ont fourni de très bons résultats.

Outre la phase amylacée et la matière thermoplastique, le produit plat peut comprendre un agent de couplage, parfois appelé aussi agent compatibilisant. Cet agent de couplage peut être quelconque, mais la demanderesse préfère toutefois mettre en oeuvre un ou des agents de couplage choisis parmi les polyoléfines modifiées par greffage d'anhydride maléique et les copolymères et terpolymères d'oléfine et d'anhydride maléique. Les terpolymères d'éthylène, d'anhydride maléique et d'esters acryliques ont donné de très bons résultats.

La teneur en agent(s) de couplage représente généralement au moins 0,5 % et, de préférence, au moins 1 % en poids du produit plat ou, dans le cas d'une structure multicouche, de sa ou ses couches comprenant une phase amylacée.

D'autre part, cette teneur ne dépasse généralement pas 30 % et, de préférence, ne dépasse pas 20 % en poids du produit plat ou, dans le cas d'une structure multicouche, de sa ou ses couches comprenant une phase amylacée.

A la phase amylacée et à la matière thermoplastique peuvent aussi être ajoutés d'autres additifs usuels, comme des lubrifiants, stabilisants, pigments, colorants et des charges minérales et/ou organiques.

L'étape spécifique d'humidification du produit plat peut avoir lieu après un délai quelconque après sa fabrication. Cependant il est avantageux que cette étape soit située en ligne avec l'étape de fabrication.

"En ligne" signifie que le procédé ne comporte pas d'étape de stockage, même temporaire, entre l'étape de fabrication et l'étape spécifique d'humidification. L'humidification est donc réalisée de façon continue, à la vitesse de l'étape de fabrication. Une ou plusieurs étapes diverses peuvent cependant se situer entre l'étape de fabrication et l'étape spécifique d'humidification, ou après cette dernière (essuyage ou séchage superficiel du produit plat par exemple).

D'excellents résultats ont été obtenus en fabricant le produit plat par extrusion à travers une filière plate, puis passage en continu sur un cylindre refroidisseur et une étape spécifique d'humidification.

Un avantage important du procédé de traitement selon l'invention réside dans l'amélioration de la reproductibilité des propriétés de soudage par courant haute fréquence.

Dès lors, l'invention concerne aussi un procédé pour la production d'un article comprenant au moins un produit plat comprenant une phase amylacée, procédé de production caractérisé en ce qu'il comprend au moins un traitement selon l'invention et au moins une étape de soudage par courant haute fréquence.

L'article visé dans le cadre de l'invention peut être de toute nature, pour autant que sa réalisation ait comporté une étape de soudage par courant haute fréquence d'au moins un produit plat comprenant une phase amylacée. Cet article peut être utilisé dans tous les domaines. Il peut s'agir, notamment, d'un article destiné aux domaines de l'emballage, de la papeterie ou de la maroquinerie.

Le soudage par courant haute fréquence est une technique bien connue de l'homme du métier comprenant l'introduction d'au moins deux objets à souder (ou de deux parties du même objet) à l'intérieur de deux mâchoires métalliques entre lesquelles on applique une tension alternative de haute fréquence pendant un temps déterminé, les mâchoires (c'est-à-dire les électrodes) enserrant les objets selon une géométrie déterminée. Par haute fréquence, on entend désigner ici les fréquences supérieures à 10 MHz. La plupart des appareillages proposés industriellement fonctionnent entre 20 et 100 MHz, à 27 MHz plus particulièrement. Les objets à souder sont habituellement deux produits plats susceptibles d'échauffement sous l'effet d'un courant haute fréquence.

Dans le cadre de l'invention, on entend désigner par soudage d'un produit plat, toute opération de soudage par courant haute fréquence faisant intervenir au moins une épaisseur du produit plat considéré.

Le deuxième objet à souder à celui-ci peut être de nature quelconque, mais, le plus souvent cependant, il s'agit d'un produit plat de nature similaire ou de même nature, voire une seconde épaisseur du même produit plat.

Que l'étape de fabrication du produit plat ait précédé immédiatement l'étape spécifique d'humidification ou pas, il est à remarquer que l'étape de soudage peut se situer après un délai parfois assez long à compter de l'étape spécifique d'humidification, le produit plat étant alors stocké provisoirement.

Les procédés conformes à l'invention sont en outre illustrés, de manière non limitative, par les exemples pratiques suivants.

### Exemple 1

Des granules ont été réalisés par compoundage de la composition donnée au tableau 1 au moyen d'une extrudeuse à deux vis corotatives.

**Tableau 1**

| Composants | Proportions (% en poids du total de la composition) |
|---|---|
| LLDPE⁽^{*}⁾ | 59,5 |
| Agent de couplage⁽^{**}⁾ | 3,5 |
| Amidon de blé natif (contenant 12 % pds d'eau) | 26,5 |
| Sorbitol | 3,1 |
| Glycérine | 3,1 |
| Lactate de Sodium (solution aqueuse à 60 % de mat. sèche) | 2,6 |
| Chlorure de Sodium (solution aqueuse à 25 % de mat. sèche) | 1,7 |

| | |
|---|---|
| * : copolymère éthylène / butène, MFI (2,16 kg, 190 °C): 2,8 g/10 min, densité: 0,918 g/cm³ | |
| ** : terpolymère éthylène / ester acrylique / anhydride maléique, 9 % (poids) de comonomères hors éthylène, MFI (2,16 kg, 190 °C): 5 g/10 min. | |

Après séchage en étuve sous vide, les granules ont été extrudés à travers une filière plate de 260 mm de largeur, au moyen d'une extrudeuse monovis TROESTER EP 30, sans dégazage et avec une température de consigne de 100 °C pour la zone d'alimentation et de 150 °C pour les zones suivantes et la filière. A la sortie de la filière, le film obtenu, d'une épaisseur de 250 µm, a été déposé sur un cylindre refroidisseur conditionné à 85 °C, puis immergé dans un bain d'eau à 65 °C, avec des longueurs immergées variables, correspondant donc à différents temps de séjour.

A la sortie du bain d'eau, les surfaces du film ont été débarrassées de l'eau excédentaire au moyen d'une soufflerie à air froid et d'un feutre absorbant effleurant les surfaces du film. Celui-ci a ensuite été enroulé sur un mandrin.

Les films ainsi obtenus ont ensuite subi, immédiatement après la mise en oeuvre, des tests de soudabilité par courant haute fréquence. La même procédure a été suivie pour un film témoin, excepté qu'il n'a pas été immergé dans le bain d'eau après extrusion.

Les tests de soudabilité ont été effectués au moyen d'une machine MYSTER 30, fonctionnant à 27 MHz, et munie d'une électrode rectangulaire de 5 mm de largeur et 120 mm de longueur. Les soudures du film sur lui-même ont été réalisées en 2 secondes, avec un écartement entre l'électrode et la contre-électrode correspondant à une simple épaisseur du film, et à une puissance nominale correspondant à 70 % de la puissance maximale.

La qualité des soudures a été évaluée par la mesure du courant d'électrode, de la largeur de soudure obtenue, ainsi que par une estimation visuelle de leur résistance au délaminage sous traction.

Le tableau 2 reprend les résultats, avec une indication de la teneur en eau des films soudés.

**Tableau 2**

| Temps de séjour dans l'eau (s) | Teneur en eau du film (% poids) | Courant d'électrode (A) | Largeur de la soudure (mm) | Délaminage |
|---|---|---|---|---|
| 0 (témoin) | 0,6 | 0,12 | non soudé | - |
| 20 | 1,2 | 0,13 | 2,1 | oui |
| 42 | 1,1 | 0,14 | 2,7 | non |
| 122 | 2,0 | 0,16 | 3,0 | non |

### Exemple 2

Des films de 40 m de longueur et de 250 µm d'épaisseur, de même composition que ceux de l'exemple 1 et fabriqués de la même manière, ont été enroulés sur des mandrins de 9 cm de diamètre, formant une épaisseur cumulée de 3 cm environ. Ces bobines ont été stockées pendant 6 jours à température et humidité ambiantes. Ensuite les films constituant ces bobines ont subi des tests de soudabilité par courant haute fréquence identiques à ceux de l'exemple 1. Des échantillons ont été prélevés dans le coeur des bobines et à leur périphérie.

Les résultats sont mentionnés dans le tableau 3.

**Tableau 3**

| Temps de séjour dans l'eau/emplacement dans la bobine/puissance nominale | Largeur de la soudure (mm) | Délaminage |
|---|---|---|
| 0 s (témoin) / coeur / 45 % | 1,4 | oui |
| 0 s (témoin) / périphérie / 45 % | 1,8 | oui |
| 0 s (témoin) / coeur / 50 % | 1,9 | oui |
| 0 s (témoin) / périphérie / 50 % | 2,0 | non |
| 0 s (témoin) / coeur / 55 % | 2,6 | non |
| 0 s (témoin) / périphérie / 55 % | 2,7 | non |
| 90 s / coeur / 45 % | 2,4 | non |
| 90 s / périphérie / 45 % | 2,4 | non |
| 90 s / coeur / 50 % | 2,8 | non |
| 90 s / périphérie / 50 % | 2,6 | non |
| 90 s / coeur / 55 % | 3,0 | non |
| 90 s / périphérie / 55 % | 3,0 | non |

### Exemple 3

Des films de 250 µm d'épaisseur, de même composition que ceux des exemples précédents et fabriqués de la même manière, non humidifiés, ont été séchés en étuve sous vide. Ils ont ensuite été immergés dans un bain d'eau à 20, 50 ou 80 °C, ou encore suspendus dans de la vapeur d'eau (à pression atmosphérique, 100 °C) à l'intérieur d'un récipient fermé, pendant 30 secondes.

Le tableau 4 reprend, pour chaque traitement d'humidification, la quantité d'eau absorbée (mesurée par différence de poids) et les largeurs de soudure à 80 et 90 % de la puissance maximale (mêmes conditions de mesure de la soudabilité que pour les exemples précédents). Le film témoin, réalisé de la même façon, n'a subi aucun traitement d'humidification. L'eau adsorbée par ce film provient donc uniquement de l'humidité atmosphérique ambiante.

**Tableau 4**

| | Témoin | 20 °C | 50 °C | 80 °C | 100°C |
|---|---|---|---|---|---|
| Absorption d'eau (g/m²) | 1,0 | 1,3 | 1,3 | 3,9 | 3,2 |
| Largeur soudure à 90 % (mm) | 1,4 | 1,0 | 1,5 | 3,2 | 2,8 |
| Largeur soudure à 80 % (mm) | 0 | 0 | 0 | 2,1 | 1,3 |

## Revendications

1. Procédé de traitement d'un produit plat comprenant une phase amylacée, caractérisé en ce que le produit plat est soumis, après sa fabrication, à au moins une étape spécifique d'humidification.

2. Procédé selon la revendication 1 dans lequel le produit plat est un film ou une feuille.

3. Procédé selon l'une quelconque des revendications précédentes dans lequel l'étape spécifique d'humidification consiste soit en un passage du produit plat dans une chambre dont l'atmosphère est enrichie en vapeur d'eau, soit en une immersion du produit plat dans un bain d'eau, soit à soumettre le produit plat à une ou plusieurs pulvérisations d'eau liquide ou à un ou plusieurs jets de vapeur d'eau.

4. Procédé selon l'une quelconque des revendications précédentes dans lequel l'humidification s'effectue à une température supérieure ou égale à 25°C.

5. Procédé selon la revendication 4 dans lequel l'humidification s'effectue à une température supérieure ou égale à 50°C.

6. Procédé selon l'une quelconque des revendications précédentes dans lequel le produit plat comprend en outre une matière thermoplastique.

7. Procédé selon la revendication 6 dans lequel la matière thermoplastique comprend une polyoléfine ou un mélange de polyoléfines.

8. Procédé selon la revendication 7 dans lequel au moins une polyoléfine est un polyéthylène.

9. Procédé selon l'une quelconque des revendications 6 à 8 dans lequel le produit plat comprend en outre un agent de couplage.

10. Procédé selon l'une quelconque des revendications précédentes dans lequel l'étape spécifique d'humidification est située en ligne avec l'étape de fabrication du produit plat.

11. Procédé pour la production d'un article comprenant au moins un produit plat comprenant une phase amylacée, caractérisé en ce qu'il comprend au moins un traitement selon l'une quelconque des revendications précédentes et au moins une étape de soudage par courant haute fréquence.
